# FASCICULE DE BREVET EUROPEEN

(11) **EP 3 536 537 B1**
(45) Date de publication et mention de la délivrance du brevet: **13.05.2020**
(21) Numéro de dépôt: 19161059.1
(22) Date de dépôt: 06.03.2019
(51) Int. Cl.: B60L 5/00, B60L 9/00, B60L 50/12

(54) **SECTIONNEUR DE RECONFIGURATION DE L'ALIMENTATION D'UN SYSTÈME D'ENTRAINEMENT ÉLECTRIQUE D'UN VÉHICULE, NOTAMMENT UN VÉHICULE FERROVIAIRE**
TRENNSCHALTER ZUR NEUKONFIGURATION DER STROMVERSORGUNG EINES ELEKTRISCHEN ANTRIEBS EINES FAHRZEUGS, INSBESONDERE EINES EISENBAHNFAHRZEUGS
DISCONNECTOR FOR RECONFIGURING THE POWER SUPPLY OF AN ELECTRIC DRIVE SYSTEM OF A VEHICLE, IN PARTICULAR A RAILWAY VEHICLE

(30) Priorité: 08.03.2018 FR 1852007
(43) Date de publication de la demande: 11.09.2019
(73) Titulaire: ALSTOM Transport Technologies, 93400 Saint-Ouen (FR)
(72) Inventeur: FAUCHER, Tony, 65380 OSSUN (FR)
(74) Mandataire: Lavoix

(56) Documents cités:
- EP-A1- 2 599 656
- EP-A1- 2 671 748
- WO-A1-2014/206079
- WO-A1-2017/093273

## Description

La présente invention concerne un sectionneur de reconfiguration de l'alimentation d'un système d'entrainement électrique d'un véhicule, notamment un véhicule ferroviaire, le système d'entrainement comprenant en outre :
- un premier module d'alimentation, par moteur, en courant alternatif triphasé présentant trois sorties distinctes;
- un deuxième module d'alimentation, par caténaire, en courant alternatif monophasé présentant deux sorties distinctes;
- un module de puissance présentant trois entrées distinctes, le module de puissance étant propre à convertir le courant alternatif fourni par le premier ou le deuxième module d'alimentation en courant continu configuré pour alimenter un bloc de traction du véhicule ferroviaire.

L'invention concerne également un système d'entrainement électrique d'un véhicule, notamment un véhicule ferroviaire comportant un tel sectionneur, un véhicule ferroviaire comprenant un tel système d'entrainement électrique et un procédé de reconfiguration d'alimentation d'un système d'entrainement électrique d'un véhicule, notamment un véhicule ferroviaire.

Dans le domaine des transports mettant en œuvre par exemple des véhicules ferroviaires, il est connu de combiner différents types d'alimentation selon que le véhicule se déplace sur un réseau de transport, par exemple un réseau ferroviaire, pourvu ou dépourvu de captage du courant par dispositif aérien, notamment au moyen de caténaires(s). Un tel agencement est décrit dans la demande de brevet EP2 671 748 A1 (Hitachi).

En l'absence de captage du courant par dispositif aérien, une source d'alimentation complémentaire alimente en électricité le bloc de traction du véhicule, une telle source complémentaire correspondant par exemple à un moteur à combustion interne, tel qu'un moteur diesel.

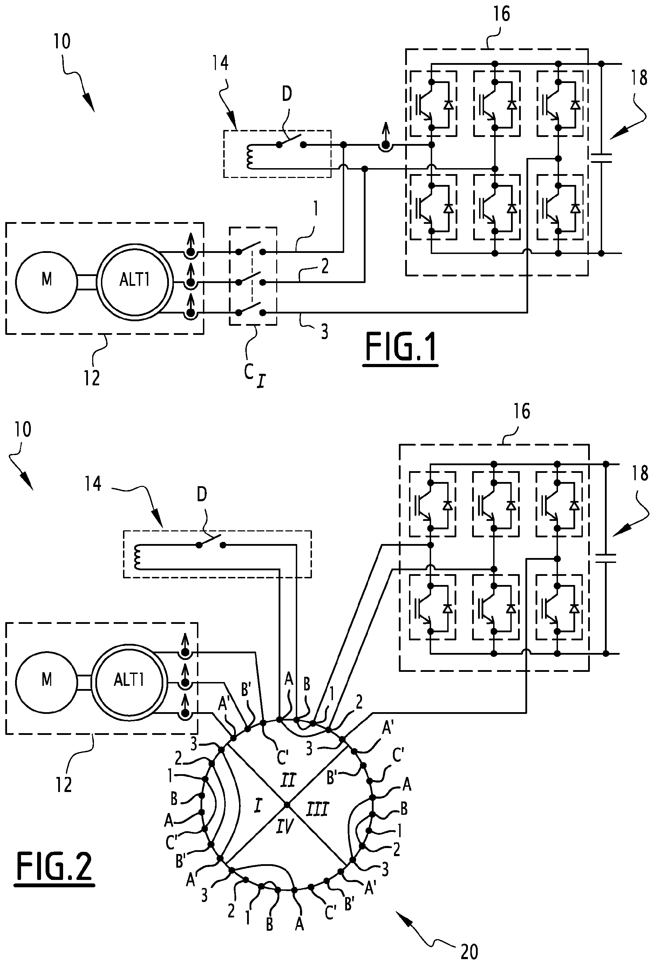

Pour permettre de combiner des différentes sources d'alimentation, il est connu de mettre en œuvre un système d'entrainement électrique tel que représenté sur la figure 1 représentative de l'état de la technique actuel.

Un tel système d'entrainement électrique comprend notamment au moins :
- un premier module 12 d'alimentation, par moteur, en courant alternatif triphasé présentant trois sorties distinctes ;
- un deuxième module 14 d'alimentation, par caténaire, en courant alternatif monophasé présentant deux sorties distinctes ;
- un module de puissance 16 présentant trois entrées distinctes 1, 2 3, le module de puissance 16 étant propre à convertir le courant alternatif fourni par le premier 12 ou le deuxième 14 module d'alimentation en courant continu configuré pour alimenter un bloc de traction 18 du véhicule ferroviaire, le bloc de traction 18 étant connecté en parallèle via un condensateur au module de puissance 16.

En outre, pour permettre la reconfiguration d'alimentation du véhicule en cas de modification de la source d'énergie disponible, un contacteur (i.e. interrupteur) isolant C_{I} est mis en œuvre tel qu'illustré par la figure 1 pour connecter/déconnecter simultanément au moyen de trois interrupteurs en parallèle les trois sorties du premier module 12 d'alimentation, par moteur, en courant alternatif triphasé au trois entrées distinctes 1, 2 3 du module de puissance 16, la déconnexion du contacteur isolant C_{I} déclenchant automatiquement la mise en contact par passage en position fermée de l'interrupteur D d'isolation du deuxième module 14 d'alimentation, par caténaire, en courant alternatif monophasé.

Dans cette position fermée de l'interrupteur D d'isolation du deuxième module 14 d'alimentation, les deux sorties du transformateur électrique contenu dans le deuxième module 14 d'alimentation sont alors connectées au deux entrées 1 et 2 du module de puissance 16.

Toutefois, un tel fonctionnement du contacteur isolant C_{I} revient à une sollicitation supérieure des composants électroniques du module de puissance 16 connectés aux entrées 1 et 2 et une sollicitation inférieure des composants électroniques connectés à l'entrée 3 uniquement sollicité en cas de connexion du premier module 12 d'alimentation.

En d'autres termes, un tel système d'entrainement électrique est propre à provoquer une usure inégale des composants électroniques du module de puissance 16.

Une des buts de l'invention est de proposer une solution de reconfiguration d'alimentation d'un système d'entrainement électrique de véhicule propre à optimiser la durée de vie du module de puissance et le coût de fonctionnement et de maintenance associé.

A cet effet, l'invention concerne un sectionneur de reconfiguration de l'alimentation d'un système d'entrainement électrique d'un véhicule, notamment un véhicule ferroviaire, le système d'entrainement comprenant en outre :
- un premier module d'alimentation, par moteur, en courant alternatif triphasé présentant trois sorties distinctes;
- un deuxième module d'alimentation, par caténaire, en courant alternatif monophasé présentant deux sorties distinctes;
- un module de puissance présentant trois entrées distinctes, le module de puissance étant propre à convertir le courant alternatif fourni par le premier ou le deuxième module d'alimentation en courant continu configuré pour alimenter un bloc de traction du véhicule ferroviaire,
le sectionneur présentant quatre positions distinctes de fonctionnement :
- une première position d'établissement de liaison entre les trois sorties du premier module d'alimentation en courant alternatif triphasé et les trois entrées du module de puissance respectivement, et
- trois positions distinctes d'établissement de liaison entre le deuxième module d'alimentation en courant alternatif monophasé et le module de puissance, chacune desdites trois positions étant propre à relier respectivement les deux sorties du deuxième module d'alimentation à une paire distincte d'entrées parmi les trois entrées du module de puissance.

Selon des modes de réalisation particuliers, le sectionneur de reconfiguration de l'alimentation comprend une ou plusieurs des caractéristiques suivantes, prises isolément ou selon toutes les combinaisons techniquement possibles :
- en présence d'une entrée défaillante parmi les trois entrées du module de puissance, le sectionneur est propre à être placé systématiquement sur la position, parmi lesdites trois positions distinctes, d'établissement de liaison entre le deuxième module d'alimentation en courant alternatif monophasé et le module de puissance, associée à la paire d'entrées du module de puissance dépourvue de ladite entrée défaillante ;
- les trois positions distinctes d'établissement de liaison entre le deuxième module d'alimentation en courant alternatif monophasé et le module de puissance sont propres à être sélectionnées chacune à leur tour après : une sélection/désélection préalable de la première position d'établissement de liaison entre le premier module d'alimentation en courant alternatif triphasé et le module de puissance respectivement, ou écoulement d'un temps de fonctionnement prédéterminé.
- le sectionneur comprend un indicateur propre à indiquer la dernière desdites trois positions distinctes d'établissement de liaison entre le deuxième module d'alimentation en courant alternatif monophasé et le module de puissance, activée avant passage dans la première position d'établissement de liaison entre le premier module d'alimentation en courant alternatif triphasé et le module de puissance respectivement ;
- ledit indicateur est propre à être stocké dans un espace mémoire dédié du sectionneur ;
- le sectionneur correspond sensiblement à un disque rotatif subdivisé en quatre quartiers, chaque quartier étant associé à l'une desdites quatre positions distinctes de fonctionnement ;
- le sectionneur est rotatif selon un sens prédéterminé ;
- le sectionneur correspond à la combinaison d'au moins quatre sous-sectionneurs distincts associés chacun respectivement auxdites quatre positions distinctes de fonctionnement.

L'invention a également pour objet un système d'entrainement électrique d'un véhicule, notamment un véhicule ferroviaire, le système d'entrainement comprenant un premier module d'alimentation, par moteur, en courant alternatif triphasé présentant trois sorties distinctes, un deuxième module d'alimentation, par caténaire, en courant alternatif monophasé présentant deux sorties distinctes, et un module de puissance présentant trois entrées distinctes, le module de puissance étant propre à convertir le courant alternatif fourni par le premier ou le deuxième module d'alimentation en courant continu configuré pour alimenter un bloc de traction du véhicule ferroviaire, ledit système d'entrainement comprenant un sectionneur tel que défini ci-dessus.

L'invention a également pour objet un véhicule ferroviaire comprenant un tel système d'entrainement.

L'invention a également pour objet un procédé de reconfiguration de l'alimentation d'un système d'entrainement électrique d'un véhicule, notamment un véhicule ferroviaire, le procédé comprenant l'emploi d'au moins un sectionneur tel que défini ci-dessus.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 représente schématiquement un sectionneur de reconfiguration de l'alimentation d'un système d'entrainement électrique d'un véhicule selon l'état de la technique tel qu'évoqué précédemment;
- la figure 2 représente schématiquement un sectionneur de reconfiguration de l'alimentation d'un système d'entrainement électrique conforme à l'invention.

Dans la suite de la description, l'expression « sensiblement » exprimera une relation d'égalité à plus ou moins 10%.

Par la suite, on entend par « sectionneur de reconfiguration de l'alimentation » un connecteur sélectif, ou encore un commutateur sélectif.

Sur la figure 2, le sectionneur 20 de reconfiguration de l'alimentation d'un système 10 d'entrainement électrique d'un véhicule, par exemple ferroviaire, selon l'invention invention présente quatre positions I, II, III, IV distinctes de fonctionnement.

La première position I est propre à permettre l'établissement de la liaison entre les trois sorties A', B' et C' du premier module 12 d'alimentation en courant alternatif triphasé et les trois entrées 1, 2, 3 du module 16 de puissance respectivement, et est associée à une position ouverte de l'interrupteur D du deuxième module 14 d'alimentation en courant alternatif monophasé.

Autrement dit, dans cette première position I du sectionneur 20, le bloc de traction 18 du véhicule ferroviaire est propre à être alimenté électriquement via le module de puissance 16 transformant, en courant continu, le courant alternatif triphasé délivré par le premier module 12 d'alimentation comprenant le moteur M connecté à un alternateur ALT1.

En présence d'un réseau de transport doté d'un captage du courant par dispositif aérien, notamment au moyen de caténaires(s), une reconfiguration de l'alimentation électrique du véhicule est propre à être mise en œuvre au moyen du sectionneur 20 selon la présente invention dont la position est alors sélectionnée, automatiquement ou manuellement, parmi les trois positions II, III, IV distinctes d'établissement de liaison entre le deuxième module 14 d'alimentation en courant alternatif monophasé et le module de puissance 16, ces trois positions étant associées à une position fermée de l'interrupteur D du deuxième module 14 d'alimentation en courant alternatif monophasé.

Plus précisément, la position II du sectionneur 20 revient à l'établissement de la liaison entre les deux sorties A et B du deuxième module 14 d'alimentation en courant alternatif monophasé et deux entrées sur trois du module de puissance 16 à savoir les entrées 1 et 2, la sortie A étant par exemple reliée à l'entrée 2 et la sortie B étant par exemple reliée à l'entrée 1 tel qu'illustré par la figure 2. En variante, non représentée, la sortie A est reliée à l'entrée 1 et la sortie B est reliée à l'entrée 2.

La position III du sectionneur 20 revient à l'établissement de la liaison entre les deux sorties A et B du deuxième module 14 d'alimentation en courant alternatif monophasé et deux entrées sur trois du module de puissance 16, différentes de la paire d'entrées 1 et 2 considérée pour la position II, à savoir les entrées 2 et 3, la sortie A étant par exemple reliée à l'entrée 3 et la sortie B étant par exemple reliée à l'entrée 2 tel qu'illustré par la figure 2. En variante, non représentée, la sortie A est reliée à l'entrée 2 et la sortie B est reliée à l'entrée 3.

La position IV du sectionneur 20 revient à l'établissement de la liaison entre les deux sorties A et B du deuxième module 14 d'alimentation en courant alternatif monophasé et deux entrées sur trois du module de puissance 16, différentes de la paire d'entrées 1 et 2 considérée pour la position II et également différentes de la paire d'entrée 2 et 3 considérée pour la position III, à savoir les entrées 1 et 3, la sortie A étant par exemple reliée à l'entrée 3 et la sortie B étant par exemple reliée à l'entrée 1 tel qu'illustré par la figure 2. En variante, non représentée, la sortie A est reliée à l'entrée 1 et la sortie B est reliée à l'entrée 3.

Selon un mode de réalisation particulier de l'invention, la sélection de l'une des trois positions II, III, IV est effectuée selon un ordre prédéterminé de sorte à user de manière égale les sous-ensembles de composants électroniques du module de puissance 16 respectivement reliés aux entrées 1, 2 et 3.

Pour ce faire, les trois positions II, III, IV distinctes d'établissement de liaison entre le deuxième module 14 d'alimentation en courant alternatif monophasé et le module de puissance 16 sont propres à être sélectionnées chacune à leur tour, selon un premier exemple, après une sélection/désélection préalable de la première position I d'établissement de liaison entre le premier module 12 d'alimentation en courant alternatif triphasé et le module de puissance 16 respectivement.

En d'autres termes, la séquence de positions successives suivantes du sectionneur 20 est par exemple obtenue : position I, puis position II, puis position I, puis position III, puis position I, puis position IV, puis position I, puis position II, etc.

Selon un aspect particulier de cet exemple de réalisation, le sectionneur 20 comprend un indicateur propre à indiquer la dernière position des trois positions II, III, IV distinctes d'établissement de liaison entre le deuxième module 14 d'alimentation en courant alternatif monophasé et le module de puissance 16, activée avant passage dans la première position I d'établissement de liaison entre le premier module 12 d'alimentation en courant alternatif triphasé et le module de puissance 16 respectivement.

Un tel indicateur revient par exemple à l'affichage numérique de l'identifiant II, III ou IV de la dernière position du sectionneur 20 en mode de fonctionnement « caténaire », ou à un voyant lumineux positionné sur la partie du sectionneur 20 dédiée à cette position, ou à un curseur mécaniquement mobile pour être localisé dans ladite partie.

Dans le cas d'une sélection manuelle de la position du sectionneur 20 par un opérateur du véhicule, un tel indicateur permet d'assister, tel un pense-bête, l'opérateur pour utiliser de manière optimale le sectionneur 20 et en conséquence le système d'entrainement électrique 10 associé, de sorte à éviter par exemple l'utilisation répétée de la même position II par rapport aux position III ou IV.

Dans le cas d'une sélection automatique de la position du sectionneur 20 mis en œuvre par un contrôleur (le contrôleur étant un composant électronique), un tel indicateur est par exemple stocké dans un espace mémoire du sectionneur 20 auquel le contrôleur électronique à accès de sorte que d'une utilisation à une autre le contrôleur est propre à mettre en œuvre une permutation circulaire des trois positions II, III, IV distinctes d'établissement de liaison entre le deuxième module 14 d'alimentation en courant alternatif monophasé et le module de puissance 16.

Selon un autre exemple de ce mode de réalisation particulier, les trois positions II, III, IV distinctes d'établissement de liaison entre le deuxième module 14 d'alimentation en courant alternatif monophasé et le module de puissance 16 sont propres à être sélectionnées chacune à leur tour (i.e. selon une permutation circulaire) après écoulement d'un temps (i.e. une période de temps) de fonctionnement prédéterminé.

En d'autres termes, si par exemple, l'ensemble du déplacement du véhicule, par exemple ferroviaire, est effectué sur un réseau pourvu de captage du courant par dispositif aérien, notamment au moyen de caténaires(s), les trois positions II, III, IV distinctes d'établissement de liaison entre le deuxième module 14 d'alimentation en courant alternatif monophasé et le module de puissance 16 sont propres à être sélectionnées l'une après l'autre au bout d'un temps d'utilisation prédéterminé égal par exemple à un tiers de la durée du trajet total considéré à parcourir.

En variante, le temps de fonctionnement prédéterminé propre à déclencher la permutation circulaire des positions II, III, IV est fixé indépendamment de la durée de trajet du véhicule, et associé à la mise en œuvre d'un compteur temporel, non représenté, propre à chaque position II, III, IV (i.e. un compteur par position). Par exemple, si le temps de fonctionnement prédéterminé est égal à une heure, au bout d'une heure en position II, la position III sera activée. Si l'arrêt du véhicule, et donc l'absence d'alimentation, intervient avant l'expiration d'un tel temps de fonctionnement, la même position d'établissement de liaison entre le deuxième module 14 d'alimentation en courant alternatif monophasé et le module de puissance 16, par exemple la position II sera activée pour une alimentation suivante du véhicule en mode « caténaire » jusqu'à ce que le temps de fonctionnement prédéterminé expire ce qui entrainera le passage en position III.

Autrement dit, un opérateur (i.e. un humain) du véhicule, notamment un véhicule ferroviaire, ou un composant de contrôle (i.e. un contrôleur) est propre à sélectionner, respectivement manuellement ou automatiquement, l'une des trois positions II, III, IV distinctes d'établissement de liaison entre le deuxième module 14 d'alimentation en courant alternatif monophasé et le module de puissance 16 de sorte que leur temps d'utilisation soit égal (i.e. homogène) d'une position du sectionneur 20 à l'autre, ce qui, à termes, permet de prolonger la durée de vie du module de puissance 16.

Il est ainsi évité la situation de l'état de la technique illustrée par la figure 1 selon laquelle les deux sorties du deuxième module 14 d'alimentation en courant alternatif monophasé sont systématiquement reliées aux entrées 1 et 2 du module de puissance 16, laissant inexorablement vacante l'entrée 3 et les composants électroniques associés en conséquence sous-utilisés.

Un tel cycle d'utilisation homogène de l'ensemble des entrées 1, 2, 3 du module de puissance 16 est mis en œuvre en mode de fonctionnement nominal (i.e. en l'absence de toute panne détectée au niveau d'une des trois entrées du module de puissance 16 (i.e. mode de fonctionnement dégradé)).

Par ailleurs, un tel sectionneur 20 permet en comparaison avec le contacteur (i.e. interrupteur) isolant C_{I} utilisé selon l'état de la technique illustré par la figure 1 d'améliorer l'isolation du premier module 12 d'alimentation en courant alternatif triphasé, la position inconnue du contacteur (i.e. interrupteur) isolant C_{I} par rapport à l'alternateur ALT1 au sein du système d'entrainement électrique 10 de l'état de la technique étant auparavant considérée comme problématique et coûteuse. En particulier, la position inconnue contacteur (i.e. interrupteur) isolant C_{I} imposait d'isoler le système à cause de risques sécuritaires importants.

Selon un mode de réalisation, non représenté, le système d'entrainement électrique 10 comprend en outre un module de détection de panne associée à l'une des entrées 1, 2, 3 du module de puissance 16.

Un tel module de détection est propre à alerter l'opérateur en présence d'une panne et à sélectionner en conséquence systématiquement la position de fonctionnement du sectionneur 20 qui n'implique pas l'entrée défaillante du module de puissance 16 pour laquelle la panne est détectée parmi les trois positions II, III, IV distinctes d'établissement de liaison entre le deuxième module 14 d'alimentation en courant alternatif monophasé et le module de puissance 16.

Par exemple, si une rupture ou un court-circuit de la liaison associée à l'entrée 1 du module de puissance 16 ou une panne d'un des composants électroniques associé à cette entrée 1 est détectée, le module de détection contrôlera (i.e. imposera) la sélection de la position III du sectionneur 20 propre à relier les entrées utilisables restantes 2 et 3 du module de puissance 16 avec les sorties A et B du deuxième module 14 d'alimentation en courant alternatif monophasé.

Ainsi, en comparaison avec l'état de la technique illustré par la figure 1, où en cas de panne associée à l'entrée 1 une alimentation en mode caténaire est impossible, le système d'entrainement électrique 10 selon la présente invention est propre à fonctionner en mode d'alimentation à base de caténaire, bien que l'entrée 1 du module de puissance 16 ne soit pas utilisable pour cause de panne. Un accroissement de la disponibilité du système d'entrainement électrique 10 selon la présente invention est donc obtenu en comparaison avec l'état de la technique illustré par la figure 1.

Selon l'exemple de réalisation illustré par la figure 2, le sectionneur 20 correspond sensiblement à un disque rotatif (i.e. une roue) subdivisé en quatre quartiers, chaque quartier étant associé à l'une desdites quatre positions I, II, III, IV distinctes de fonctionnement.

En particulier, un tel sectionneur 20 est rotatif selon un sens prédéterminé, par exemple le sens horaire.

En variante, non représentée, le sectionneur 20 correspond à la combinaison d'au moins quatre sous-sectionneurs distincts associés chacun respectivement auxdites quatre positions I, II, III, IV distinctes de fonctionnement.

On notera que l'invention n'est pas limitée au mode de réalisation précédemment décrit, mais pourrait présenter diverses variantes sans sortir du cadre de l'invention.

## Revendications

1. Sectionneur (20) de reconfiguration de l'alimentation d'un système (10) d'entrainement électrique d'un véhicule, notamment un véhicule ferroviaire, le système d'entrainement (10) comprenant :
- un premier module (12) d'alimentation, par moteur, en courant alternatif triphasé présentant trois sorties distinctes (A', B', C');
- un deuxième module (14) d'alimentation, par caténaire, en courant alternatif monophasé présentant deux sorties distinctes (A, B);
- un module de puissance (16) présentant trois entrées (1, 2, 3) distinctes, le module de puissance étant propre à convertir le courant alternatif fourni par le premier (12) ou le deuxième (14) module d'alimentation en courant continu configuré pour alimenter un bloc de traction (18) du véhicule;
**caractérisé en ce que** le sectionneur (20) présente quatre positions (I, II, III, IV) distinctes de fonctionnement :
- une première position (I) d'établissement de liaison entre les trois sorties du premier module (12) d'alimentation en courant alternatif triphasé et les trois entrées du module (16) de puissance respectivement, et
- trois positions (II, III, IV) distinctes d'établissement de liaison entre le deuxième module (14) d'alimentation en courant alternatif monophasé et le module de puissance (16), chacune desdites trois positions (II, III, IV) étant propre à relier respectivement les deux sorties du deuxième module (14) d'alimentation à une paire distincte d'entrées parmi les trois entrées du module de puissance (16).

2. Sectionneur (20) selon la revendication 1, dans lequel, en présence d'une entrée défaillante parmi les trois entrées (1, 2, 3) du module de puissance (16), le sectionneur (20) est propre à être placé systématiquement sur la position, parmi lesdites trois positions (II, III, IV) distinctes, d'établissement de liaison entre le deuxième module (14) d'alimentation en courant alternatif monophasé et le module de puissance (16), associée à la paire d'entrées du module de puissance (16) dépourvue de ladite entrée défaillante.

3. Sectionneur (20) selon la revendication 1 ou 2, dans lequel les trois positions (II, III, IV) distinctes d'établissement de liaison entre le deuxième module (14) d'alimentation en courant alternatif monophasé et le module de puissance (16) sont propres à être sélectionnées chacune à leur tour après :
- une sélection/désélection préalable de la première position (I) d'établissement de liaison entre le premier module (12) d'alimentation en courant alternatif triphasé et le module de puissance (16), ou
- écoulement d'un temps de fonctionnement prédéterminé.

4. Sectionneur (20) selon la revendication 3, dans lequel le sectionneur (20) comprend un indicateur propre à indiquer la dernière desdites trois positions (II, III, IV) distinctes d'établissement de liaison entre le deuxième module (14) d'alimentation en courant alternatif monophasé et le module de puissance (16), activée avant passage dans la première position (I) d'établissement de liaison entre le premier module (12) d'alimentation en courant alternatif triphasé et le module de puissance (16) respectivement.

5. Sectionneur (20) selon la revendication 4, dans lequel ledit indicateur est propre à être stocké dans un espace mémoire dédié du sectionneur (20).

6. Sectionneur (20) selon l'une quelconque des revendications précédentes, dans lequel le sectionneur (20) correspond sensiblement à un disque rotatif subdivisé en quatre quartiers, chaque quartier étant associé à l'une desdites quatre positions distinctes de fonctionnement.

7. Sectionneur (20) selon l'une quelconque des revendications 1 à 4, dans lequel le sectionneur (20) correspond à la combinaison d'au moins quatre sous-sectionneurs distincts associés chacun respectivement auxdites quatre positions distinctes de fonctionnement.

8. Système d'entrainement (10) électrique d'un véhicule, notamment un véhicule ferroviaire, le système d'entrainement comprenant :
- un premier module (12) d'alimentation, par moteur, en courant alternatif triphasé présentant trois sorties distinctes;
- un deuxième module (14) d'alimentation, par caténaire, en courant alternatif monophasé présentant deux sorties distinctes;
- un module de puissance (16) présentant trois entrées distinctes, le module de puissance étant propre à convertir le courant alternatif fourni par le premier ou le deuxième module d'alimentation en courant continu configuré pour alimenter un bloc de traction (18) du véhicule ferroviaire ;
**caractérisé en ce que** ledit système d'entrainement comprend un sectionneur (20) selon l'une quelconque des revendications précédentes.

9. Véhicule ferroviaire **caractérisé en ce qu'**il comprend un système d'entrainement selon la revendication 8.

10. Procédé de reconfiguration de l'alimentation d'un système d'entrainement électrique d'un véhicule, notamment un véhicule ferroviaire, le procédé comprenant l'emploi d'au moins un sectionneur selon l'une quelconque des revendications 1 à 7.

## Patentansprüche

1. Trennschalter (20) zur Neukonfiguration der Stromversorgung eines elektrischen Antriebs (10) eines Fahrzeugs, insbesondere eines Eisenbahnfahrzeugs, wobei der Antrieb (10) umfasst:
- ein erstes motorisiertes Dreiphasenwechselstromversorgungsmodul (12) mit drei unterschiedlichen Ausgängen (A', B', C') ;
- ein an die Oberleitung angeschlossenes zweites Einphasenwechselstromversorgungsmodul (14) mit zwei unterschiedlichen Ausgängen (A, B);
- ein Leistungsmodul (16) mit drei unterschiedlichen Eingängen (1, 2, 3), wobei das Leistungsmodul dazu geeignet ist, den vom ersten (12) bzw. zweiten Stromversorgungsmodul (14) bereitgestellten Wechselstrom in Gleichstrom umzuwandeln, der zur Versorgung eines Spannungsblocks (18) des Fahrzeugs konfiguriert ist,
**dadurch gekennzeichnet, dass** der Trennschalter (20) vier unterschiedliche Betriebsstellungen (I, II, III, IV) aufweist, und zwar:
- eine erste Stellung (I) zur Herstellung einer Verbindung zwischen den drei Ausgängen des ersten Dreiphasenwechselstromversorgungsmoduls (12) und den jeweiligen drei Eingängen (16) des Leistungsmoduls (16) und
- drei unterschiedliche Stellungen (II, III, IV) zur Herstellung einer Verbindung zwischen dem zweiten Einphasenwechselstromversorgungsmodul (14) und dem Leistungsmodul (16), wobei jede der drei Stellungen (II, III, IV) dazu geeignet ist, die zwei Ausgänge des zweiten Stromversorgungsmoduls (14) mit einem unterschiedlichen Eingangspaar von den drei Eingängen des Leistungsmoduls (16) zu verbinden.

2. Trennschalter (20) nach Anspruch 1, bei dem bei Vorhandensein eines fehlerhaften Eingangs unter den drei Eingängen (1, 2, 3) des Leistungsmoduls (16) der Trennschalter (20) dazu geeignet ist, systematisch in die Stellung der drei unterschiedlichen Stellungen (II, III, IV) zur Herstellung einer Verbindung zwischen dem zweiten Einphasenwechselstromversorgungsmodul (14) und dem Leistungsmodul (16) versetzt zu werden, die dem Eingangspaar des Leistungsmoduls (16) ohne diesen fehlerhaften Eingang zugeordnet ist.

3. Trennschalter (20) nach Anspruch 1 oder 2, wobei die drei unterschiedlichen Stellungen (II, III, IV) zur Herstellung einer Verbindung zwischen dem zweiten Einphasenwechselstromversorgungsmodul (14) und dem Leistungsmodul (16) dazu geeignet sind, einer nach dem anderen ausgewählt zu werden, nach:
- ein vorheriges Wählen/Abwählen der ersten Stellung (I) zur Herstellung einer Verbindung zwischen dem ersten Dreiphasenwechselstromversorgungsmodul (12) und dem Leistungsmodul (16), oder
- den Ablauf einer vorgegebenen Betriebszeit.

4. Trennschalter (20) nach Anspruch 3, wobei der Trennschalter (20) einen Anzeiger umfasst, der dazu geeignet ist, diejenige der drei unterschiedlichen Stellungen (II, III, IV) zur Herstellung einer Verbindung zwischen dem zweiten Einphasenwechselstromversorgungsmodul (14) und dem Leistungsmodul (16) anzuzeigen, die vor dem Übergang in die erste Stellung (I) zur Herstellung einer Verbindung zwischen dem ersten Dreiphasenwechselstromversorgungsmodul (12) und dem Leistungsmodul (16) zuletzt aktiviert wurde jeweils.

5. Trennschalter (20) nach Anspruch 4, wobei der Anzeiger dazu geeignet ist, in einem dazu bestimmten Speicherort des Trennschalters (20) gespeichert zu werden.

6. Trennschalter (20) nach einem der vorstehenden Ansprüche, wobei der Trennschalter (20) im Wesentlichen einer in vier Viertel geteilten Drehscheibe entspricht, wobei jedes Viertel einer der vier unterschiedlichen Betriebsstellungen zugeordnet ist.

7. Trennschalter (20) nach einem der Ansprüche 1 - 4, wobei der Trennschalter (20) einer Kombination aus mindestens vier unterschiedlichen Untertrennschaltern entspricht, die jeweils den vier unterschiedlichen Betriebsstellungen zugeordnet sind.

8. Elektrischer Antrieb (10) eines Fahrzeugs, insbesondere eines Eisenbahnfahrzeugs, wobei der Antrieb umfasst:
- ein erstes motorisiertes Dreiphasenwechselstromversorgungsmodul (12) mit drei unterschiedlichen Ausgängen;
- ein an die Oberleitung angeschlossenes zweites Einphasenwechselstromversorgungsmodul (14) mit zwei unterschiedlichen Ausgängen;
- ein Leistungsmodul (16) mit drei unterschiedlichen Eingängen, wobei das Leistungsmodul dazu geeignet ist, den vom ersten bzw. zweiten Stromversorgungsmodul bereitgestellten Wechselstrom in Gleichstrom umzuwandeln, der zur Versorgung eines Spannungsblocks (18) des Eisenbahnfahrzeugs konfiguriert ist,
**dadurch gekennzeichnet, dass** der Antrieb einen Trennschalter (20) nach einem der vorstehenden Ansprüche umfasst.

9. Eisenbahnfahrzeug, **dadurch gekennzeichnet, dass** es einen Antrieb nach Anspruch 8 umfasst.

10. Verfahren zur Neukonfiguration der Stromversorgung eines elektrischen Antriebs eines Fahrzeugs, insbesondere eines Eisenbahnfahrzeugs, wobei das Verfahren den Einsatz mindestens eines Trennschalters nach einem der Ansprüche 1 - 7 umfasst.

## Claims

1. A disconnector (20) for reconfiguring the power supply of an electric drive system (10) of a vehicle, in particular a railway vehicle, the drive system (10) comprising:
- a first module (12) for supplying, by motor, three-phase AC current having three separate outputs (A', B', C');
- a second module (14) for supplying, by catenary, mono-phase AC current having two separate outputs (A, B);
- a power module (16) having three separate inputs (1, 2, 3), the power module being able to convert the AC current supplied by the first (12) or second (14) current supply module into DC current configured to supply a traction block (18) of the vehicle;
**characterized in that** the disconnector (20) has four separate operating positions (I, II, III, IV):
- a first position (I) for establishing a link between the three outputs of the first module (12) for supplying three-phase AC current and the three inputs of the power module (16), respectively, and
- three separate positions (II, III, IV) for establishing a link between the second module (14) for supplying mono-phase AC current and the power module (16), each of said three positions (II, III, IV) being able to respectively couple the two outputs of the second supply module (14) to a separate pair of inputs among the three inputs of the power module (16).

2. The disconnector (20) according to claim 1, wherein, in the presence of a faulty input among the three inputs (1, 2, 3) of the power module (16), the disconnector (20) is able to be placed systematically in the position, among said three separate positions (II, III, IV), for establishing the link between the second module (14) for supplying mono-phase AC current and the power module (16), associated with the pair of inputs of the power module (16) devoid of said faulty input.

3. The disconnector (20) according to claim 1 or 2, wherein the three separate positions (II, III, IV) for establishing a link between the second module (14) for supplying mono-phase AC current and the power module (16) are able each to be selected in turn after:
- a prior selection/de-selection of the first position (I) for establishing a link between the first module (12) for supplying three-phase AC current and the power module (16), or
- the passage of a predetermined running time.

4. The disconnector (20) according to claim 3, wherein the disconnector (20) comprises an indicator able to indicate the last of said three separate positions (II, III, IV) for establishing a link between the second module (14) for supplying mono-phase AC current and the power module (16), activated before transitioning to the first position (I) for establishing a link between the first module (12) for supplying three-phase AC current and the power module (16), respectively.

5. The disconnector (20) according to claim 4, wherein said indicator is able to be stored in a dedicated memory area of the disconnector (20).

6. The disconnector (20) according to any one of the preceding claims, wherein the disconnector (20) substantially corresponds to a rotating disc subdivided into four quarters, each quarter being associated with one of said four separate operating positions.

7. The disconnector (20) according to any one of claims 1 to 4, wherein the disconnector (20) corresponds to the combination of at least four sub-disconnectors each respectively associated with said four separate operating positions.

8. An electric drive system (10) of a vehicle, in particular a railway vehicle, the drive system comprising:
- a first module (12) for supplying, by motor, three-phase AC current having three separate outputs;
- a second module (14) for supplying, by catenary, mono-phase AC current having two separate outputs;
- a power module (16) having three separate inputs, the power module being able to convert the AC current supplied by the first or the second supply module into DC current configured to supply a traction block (18) of the railway vehicle;
**characterized in that** said drive system comprises a disconnector (20) according to any one of the preceding claims.

9. A railway vehicle, **characterized in that** it comprises a drive system according to claim 8.

10. A method for reconfiguring the power supply of an electric drive system of a vehicle, in particular a railway vehicle, the method comprising the use of at least one disconnector according to any one of claims 1 to 7.
